# EUROPEAN PATENT APPLICATION

(11) **EP 2 360 899 A2**
(43) Date of publication of application: **24.08.2011**
(21) Application number: 11154516.6
(22) Date of filing: 15.02.2011
(51) Int. Cl.: H04M 1/02

(54) **Slidable electronic device including touch-sensitive display**

(30) Priority: 15.02.2010 US 304648 P
(71) Applicant: Research In Motion Limited, Waterloo, ON N2L 3W8 (CA)
(72) Inventor: Allen, Aaron Robert, Sunrise, FL 33323 (US); Varela, Felipe Alonso, Sunrise, FL 33323 (US); Holman IV, Martin Earl, Sunrise, FL 33323 (US); Koppal, Rohit Krishna, Sunrise, FL 33323 (US); Moskowitz, Douglas Wayne, Sunrise, FL 33323 (US)
(74) Representative: Greenaway, Martin William

(57) **Abstract**

An electronic device includes a front portion that includes a housing, and a slider plate clamped to a back of the housing. The electronic device also includes a base that includes an input device on one surface thereof. The base is slidingly connected to the slider plate and configured to slide the base between a closed position in which the input device is disposed between the front portion and the base and an open position in which the input device is exposed for use.

## Description

### FIELD OF TECHNOLOGY

The present disclosure relates to portable electronic devices, including but not limited to, portable electronic devices having touch-sensitive displays.

### BACKGROUND

Electronic devices, including portable electronic devices, have gained widespread use and may provide a variety of functions including, for example, telephonic, electronic text messaging and other personal information manager (PlM) application functions. Portable electronic devices can include several types of devices including mobile stations such as simple cellular phones, smart phones, Personal Digital Assistants (PDAs), and laptop computers.

Devices such as PDAs or smart phones are generally intended for handheld use and ease of portability. Smaller devices are generally desirable for portability. Touch-sensitive devices constructed of a display, such as a liquid crystal display (LCD), with a touch-sensitive overlay are useful on such handheld devices as such handheld devices are small and are therefore limited in space available for user input and output devices. Further, the screen content on the touch-sensitive devices can be modified depending on the functions and operations being performed. With continued demand for decreased size of portable electronic devices, touch-sensitive displays continue to decrease in size.

### SUMMARY

According to one aspect, an electronic device includes a front portion that includes a housing, and a slider plate clamped to a back of the housing. The electronic device also includes a base that includes an input device on one surface thereof. The base is slidingly connected to the slider plate and configured to slide the base between a closed position in which the input device is disposed between the front portion and the base and an open position in which the input device is exposed for use.

According to another aspect, an electronic device includes a front portion that includes a housing defining a plurality of holes, a display provided within the housing, a slider plate clamped to a back of the housing and including a plurality of plate screw bosses extending therefrom and into corresponding ones of the holes, and a plurality of plate screws threaded in the plate screw bosses and configured for clamping the slider plate to the back of the housing. A base is slidingly connected to the slider plate and configured to slide the base between a closed position and an open position. The plate screws are hidden between the display and the slider plate when the base is in the open position.

According to another aspect, an electronic device includes a front portion that includes a housing, and a slider plate clamped to a back of the housing and including an elongate protrusion extending along opposing sides of the slider plate. The electronic device also includes a base that is slidingly connected to the slider plate and includes a guide provided on opposing sides of the base. The elongate protrusion is configured for engaging a corresponding guide, enabling the base to slide between a closed position and an open position.

### BRIEF DESCRIPTION OF THE DRAWINGS

Embodiments of the present disclosure will now be described, by way of example only, with reference to the attached Figures, wherein:

FIG. 1 is a simplified block diagram of components including internal components of a portable electronic device according to an example embodiment;

FIG. 2 is a perspective view of an example of a portable electronic device in a closed position;

FIG. 3 is a perspective view of an example of a portable electronic device in an open position;

FIG 4 is an exploded view of a front portion of the portable electronic device of FIG 2 in accordance with an example embodiment;

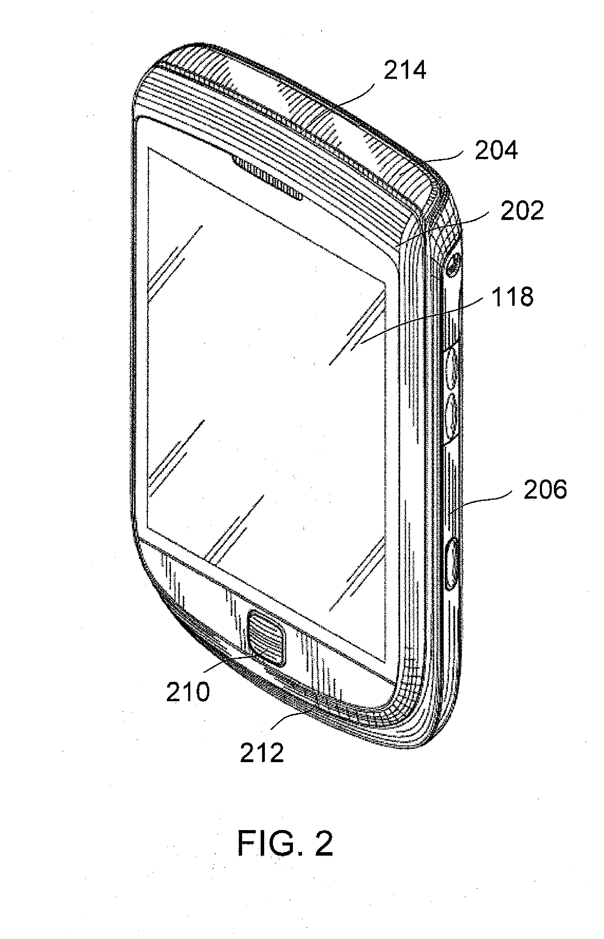

FIG- 5 is a rear view of the front portion of the portable electronic device of FIG. 2 in accordance with an example embodiment;

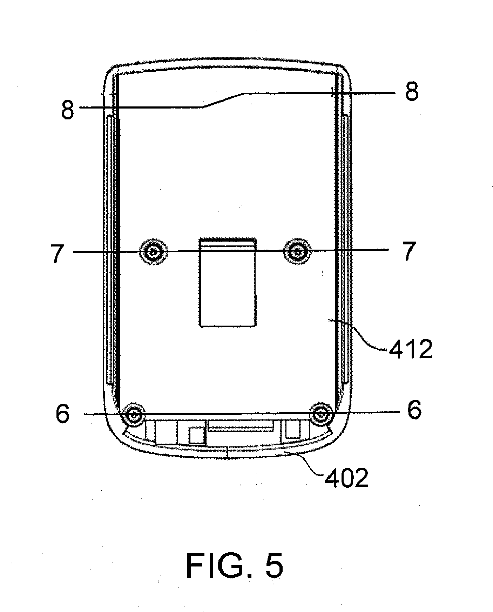

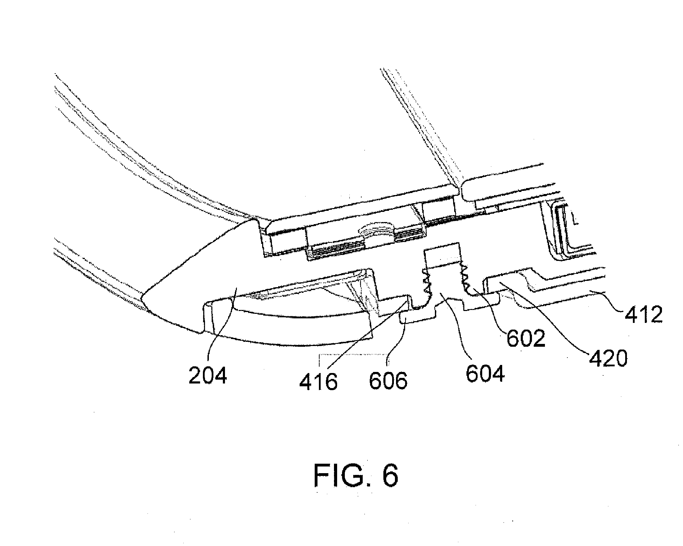

FIG. 6 is an isometric view on line 6-6 of a portion of the portable electronic device of FIG. 5;

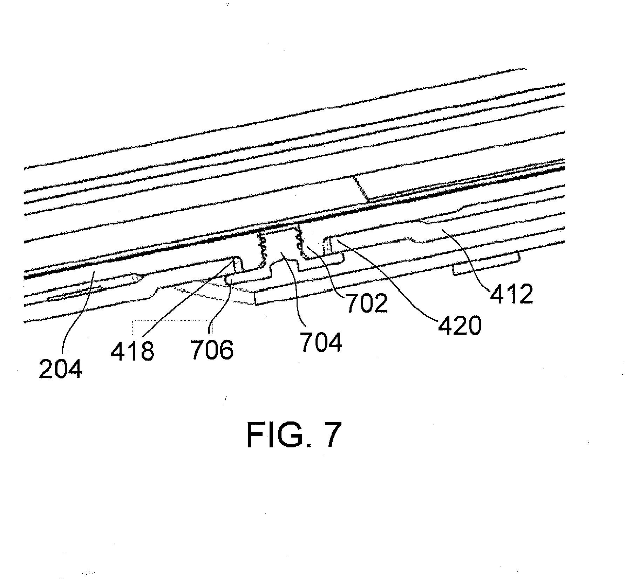

FIG 7 is an isometric view on line 7-7 of a portion of the portable electronic device of FIG. 5; and

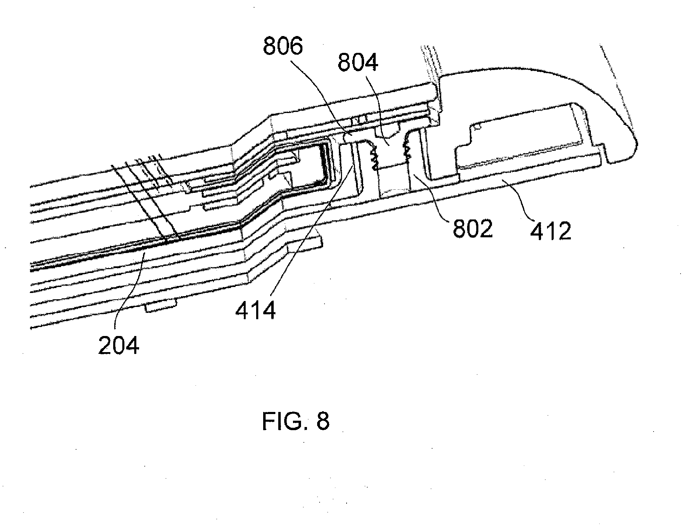

FIG 8 is an isometric view on line 8-8 of a portion of the portable electronic device of FIG. 5.

### DETAILED DESCRIPTION

The following describes an electronic device that includes a front portion comprising a housing, a display exposed by a front of the housing, and a slider plate clamped to a back of the housing. The electronic device also includes a base comprising an input device on one surface thereof, the base being slidingly engaged with the slider plate to slide the base between a closed position in which the input device is disposed between the front portion and the base and an open position in which the input device is exposed for use, and functional components disposed in at least one of the front portion and the base, the functional components comprising memory and a processor coupled to the memory and the display.

Clamping utilizing screw bosses and screws with screw heads of sufficient diameter to clamp the slider plate to the housing facilitates the reduction in thickness of the front portion of the portable electronic device in comparison to other devices. The reduction in thickness is beneficial, for example, at screws near the centerline (between the top and bottom) of the portable electronic device, where little space is available for clamping. The screw bosses may extend from the housing. Screw bosses that extend from the slider plate may also be utilized and may be advantageous as the screws heads may be hidden behind the touch-sensitive display rather than being visible when the portable electronic device is in the open position.

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practiced without these specific details. In other instances, well-known methods, procedures and components have not been described in detail so as not to obscure the example embodiments described herein. Also, the description is not to be considered as limited to the scope of the example embodiments described herein.

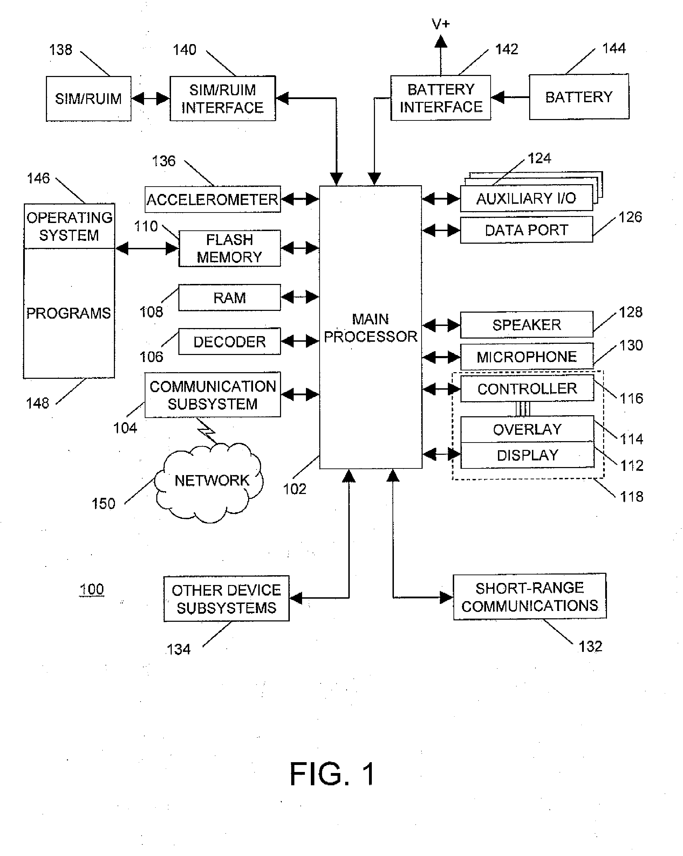

Referring first to FIG 1, a block diagram of components of the portable electronic device 100 is shown. The portable electronic device 100 includes multiple components such as a processor 102 that controls the operations of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data-centric wireless networks, voice-centric wireless networks, and dual-mode networks that support both voice and data communications over the same physical base stations. The portable electronic device 100 is a battery-powered device and includes a battery interface 142 for receiving one or more rechargeable batteries 144.

The processor 102 also interacts with additional subsystems such as a Random Access Memory (RAM) 108, a flash memory 110, a display 112 with a touch-sensitive overlay 114 connected to an electronic controller 116 that together comprise a touch-sensitive display 118, an auxiliary input/output (I/O) subsystem 124, a data port 126, a speaker 128, a microphone 130, short-range communications 132 and other device subsystems 134. User-interaction with the graphical user interface is performed through the touch-sensitive overlay 114. The processor 102 interacts with the touch-sensitive overlay 114 via the electronic controller 116. Information, such as text, characters, symbols, images, icons, and other features that may be displayed or rendered on a portable electronic device, are displayed on the touch-sensitive display 118 via the processor 102. The processor 102 may also interact with an accelerometer 136 as shown in FIG 1. The accelerometer 136 may include a cantilever beam with a proof mass and suitable deflection sensing circuitry. The accelerometer 136 may be utilized for detecting direction of gravitational forces or gravity-induced reaction forces.

To identify a subscriber for network access according to the present embodiment, the portable electronic device 100 uses a Subscriber Identity Module or a Removable User Identity Module (SIM/RUIM) card 138 inserted into a SIM/RUIM interface 140 for communication with a network such as the wireless network 150. Alternatively, user identification information may be programmed into the flash memory 110.

The portable electronic device 100 also includes an operating system 146 and software components 148 that are executed by the processor 102 and are typically stored in a persistent store such as flash memory 110. Additional applications may be loaded onto the portable electronic device 300 through the wireless network 150, the auxiliary I/O subsystem 124, the data port 126, the short-range communications subsystem 132, or any other suitable device subsystem 134.

In use, a received signal such as a text message, an e-mail message, or web page download is processed by the communication subsystem 104 and input to the processor 102. The processor 102 then processes the received signal for output to the display 112 or alternatively to the auxiliary I/O subsystem 124. A subscriber may also compose data items, such as e-mail messages, for example, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

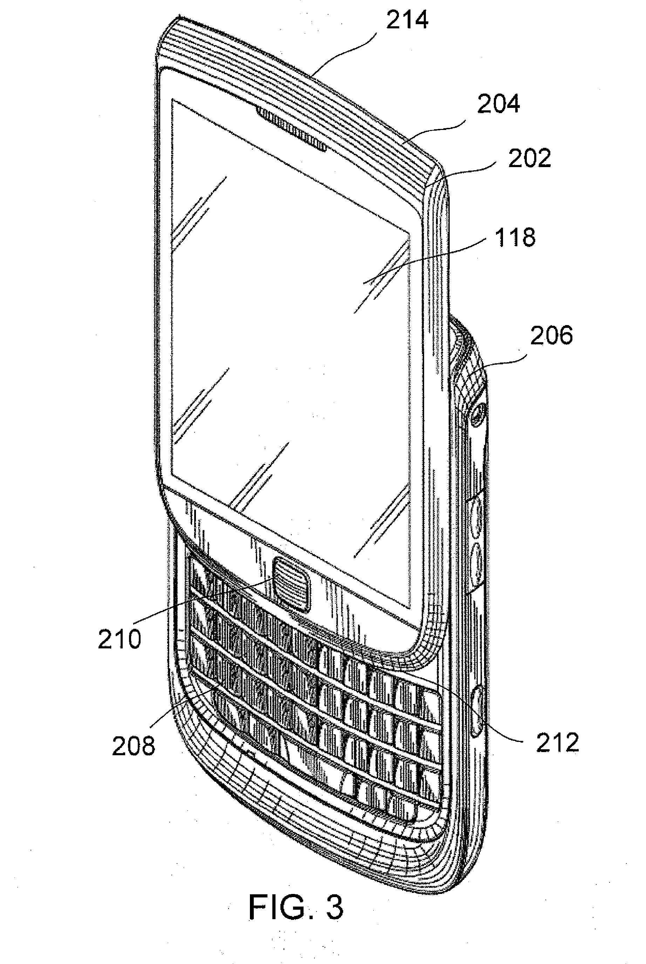

FIG 2 is a perspective view of an example of a portable electronic device 100. The portable electronic device 100 includes a front portion 202 that includes a housing 204. The housing 204 is suitable for housing internal components including internal components shown in FIG. 1. The housing 204 frames the touch-sensitive display 118 such that the touch-sensitive display is exposed for user-interaction. The portable electronic device 100 also includes a base 206 that is connected to the front portion 202 such that the base 206 slides relative to the front portion 202. The base 206 is slideable between the closed position shown in FIG. 2 and the open position shown in FIG. 3. The base 206 includes an input device, which in the embodiment shown in FIG 3 is a keyboard 208 that is connected to the processor 102. The keyboard 208 may be a physical keyboard, as shown in FIG. 3, or a virtual keyboard provided on a touchscreen display (not shown). The functional components referred to above and described with reference to FIG. 1, as well as other functional components may be housed in the housing 204 and in the base 206.

The portable electronic device 100 also includes an optical joystick or trackpad 210 centered between sides of the portable electronic device 100 and disposed near a lower edge 212 of the housing 204 such that the optical joystick 210 is located above the keyboard 208, relative to the orientation of the keyboard 208, when the base 206 is in the open position. A touch may be detected by the optical joystick 210 and processed by the processor, for example, to determine attributes of the touch including the touch location. Movement of the touch may also be detected by the optical joystick 210 for controlling movement of, for example a cursor or highlighting on the display 112. It is appreciated that the optical joystick is not limited to such a placement and may be located elsewhere on either the housing 204 or the base 206.

A speaker may be included near an upper edge 214 of the housing 204. The upper edge 214 is on the opposite end of the housing 204 as the lower edge 212. The terms upper edge 214 and lower edge 212 are utilized herein for the purpose of providing reference in the description and are not intended to be limiting.

The touch-sensitive display 118 may be a capacitive touch-sensitive display, for example, and a user's touch on the touch-sensitive display may be determined by determining the X and Y location of the touch utilizing signals generated as a result of capacitive coupling with a touch sensor layer or layers. A feature such as a virtual button or other feature displayed on the touch-sensitive display 118 may be selected by a mapping of the touch location to a feature on the touch-sensitive display 118.

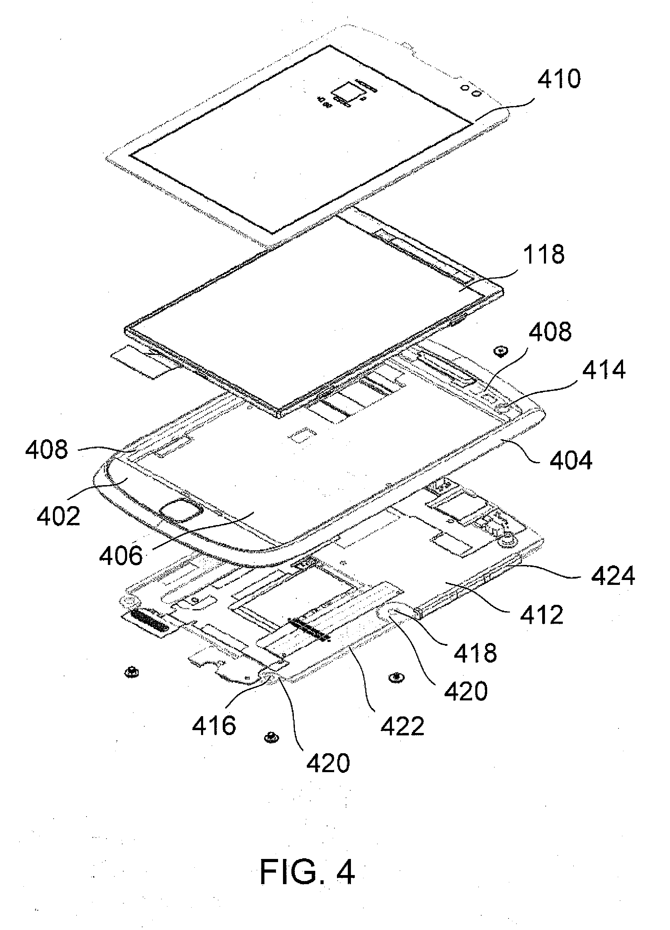

An exploded view of the front portion 202 is shown in FIG 4. The front portion 202 includes the housing 204. The housing 204 includes a front 402 that frames the touch-sensitive display 118, and sides 404, that together form a recess in which the touch-sensitive display 118 is disposed. The recess extends from the front 402 to a generally planar seat 406 on which the components of the touch-sensitive display 118 are supported. A step 408, between the seat 406 and the front 402, extends around the periphery of the recess and a protective cover 410 is disposed on the step 408. The touch-sensitive display 118 is disposed between the protective cover 410 and the seat 406.

Referring to FIG. 4 through FIG. 8, two lower screw bosses 602 (FIG 6) extend from a rear side of the housing 204, behind the step 408, with each of the two lower screw bosses 602 located near a respective corner near the lower edge 212 of the housing 204. Two central screw bosses 702 (FIG. 7) extend from a rear side of the seat 406 of the housing 204. The central screw bosses 702 are located near opposing sides 404 of the housing 204, near a centerline of the seat 406. The lower screw bosses 602 and the central screw bosses 702 are inner threaded and are utilized for clamping a slider plate 412 to the housing 204 so that the slider plate 412 acts as a back of the housing 204.

In addition to the lower screw bosses 602 and the central screw bosses 702, two holes 414 are defined through the step 408, near the upper edge 214 of the housing 204, in the rear side of the housing 204. Screws located in the holes 414 are utilized to clamp the slider plate 412 to the back of the housing 204.

Multiple holes extend through the slider plate 412, including four screw holes that are located in alignment with the lower screw bosses 602 and the central screw bosses 702. Two holes 416 are located near respective lower corners of the generally rectangular slider plate 412, in alignment with the lower screw bosses 602 of the housing, 204 and two holes 418 are located near respective sides of the slider plate 412, in alignment with the central screw bosses 702 of the housing 204. The two holes 416 located near respective lower corners of the slider plate 412 are sized such that the lower screw bosses 602 extend into the holes 416 with a clearance fit. The two holes 418 are sized such that the central screw bosses 702 extend into the holes 418 with a clearance fit.

A margin surrounding each of the holes 416, 418 is deformed to provide protrusions 420 around the holes 416, 418. The protrusions 420 correspond with depressions on the rear side of the slider plate 412 that are formed when the protrusion is formed. Each depression around the holes 416, 418 is utilized to receive a head of a respective screw that extends through the holes 416, 418 and into the screw bosses 602, 702. Thus, a countersink is provided in the rear side of the slider plate 412 to receive the screw heads.

Two lower screws 604 are inserted through the holes 416 and into the lower screw bosses 602. The lower screws 604 have large diameter heads 606 that clamp the slider plate 412 to the housing 204. The thickness of the slider plate 412 and the length of the lower screw bosses 602 are suitable such that the periphery of the large diameter heads 606 clamps the slider plate 412 to the housing 204.

Two central screws 704 are inserted through the holes 418 and into the central screw bosses 702. The central screws 704 have large diameter heads 706 that clamp the slider plate 412 to the housing 204. The thickness of the slider plate 412 and the length of the central screw bosses 702 are suitable such that the periphery of the large diameter heads 706 clamps the slider plate 412 to the housing 204.

Opposing sides of the slider plate 412 include an elongate protrusion 422 that extends the length of the sides and protrudes toward the housing 204. The protrusion 422 corresponds to an elongate depression that extends the length of the sides and is formed with and is continuous with the protrusions 420 around the central holes 418. The elongate protrusion 422 forms an edge that cooperates with a guide 424 that slides along the elongate protrusion 422. The guide 424 is connected to the base 206 such that the base 206 slides, along with the guide 424, relative to the front portion 202 of the portable electronic device 100.

Two plate screw bosses 802 (FIG. 8) are attached to the slider plate 412 and project from the slider plate 412 in the direction of the housing 204. The plate screw bosses 802 may be attached to the slider plate 412 by laser welding the plate screw bosses 802 to the side of the slider plate 412 that faces the housing 204. The plate screw bosses 802 are located near an upper edge of the slider plate 412, in alignment with the two holes 414 located through the step 408 near the upper edge 214 of the housing 204. The plate screw bosses 802 are inner threaded.

The two holes 414 that are defined in the step 408 are sized such that the plate screw bosses 802 extend into the holes 414 with a clearance fit. Two upper screws 804 are inserted through the holes 414 and into the plate screw bosses 802. The upper screws 804 have large diameter heads 806 that clamp the housing 204 to the slider plate 412.

When the base 206 is in the open position, a portion of the rear side of the slider plate 412 is exposed as the base slides to expose the keyboard 208. Screw bosses 802 that extend from the slider plate 412 and corresponding holes 414 in the housing 204 are utilized for clamping the portion of the slider plate 412 that is exposed, rather than screw bosses that extend from the housing 204 and corresponding holes in the slider plate 412. The use of screw bosses 802 and corresponding holes 414 is advantageous as screws that clamp the slider plate 412 and the housing 204 are not visible on the rear side of the slider plate 412 when the base 206 is in the open position.

As indicated above, the slider plate 412 acts as a back of the housing 204 and is utilized to slidingly engage with the guide 424 that is connected to the base 206. As indicated, the base 206 includes the keyboard 208. Other input devices may be included in the base 206, in addition to or in place of the keyboard 208. For example, navigation keys or buttons, a trackpad, trackball, multimedia keys, or other input devices may be utilized.

The embodiments shown and described herein illustrate examples only and many modifications may be made. For example, the number of actuators may differ.

According to one aspect, an electronic device includes a front portion comprising a housing, a display exposed by a front of the housing, and a slider plate clamped to a back of the housing. The electronic device also includes a base comprising an input device on one surface thereof, the base being slidingly engaged with the slider plate to slide the base between a closed position in which the input device is disposed between the front portion and the base and an open position in which the input device is exposed for use, and functional components disposed in at least one of the front portion and the base, the functional components comprising memory and a processor coupled to the memory and the display.

The use of screw bosses and screws with screw heads of sufficient diameter to clamp the slider plate to the housing facilitates the reduction in thickness of the front portion of the portable electronic device in comparison to other devices. The reduction in thickness is beneficial, for example, at screws near the center of the portable electronic device, where little space is available for clamping. The screw bosses may extend from the housing. Screw bosses that extend from the slider plate may also be utilized and may be advantageous as the screws heads may be hidden behind the touch-sensitive display rather than being visible when the base of the portable electronic device is in the open position.

White the embodiments described herein are directed to particular implementations of the actuating assembly and the portable electronic device, it will be understood that modifications and variations may occur to those skilled in the art. All such modifications and variations are believed to be within the sphere and scope of the present disclosure.

## Claims

1. An electronic device comprising:
a front portion comprising
a housing;
and
a slider plate clamped to a back of the housing;
a base comprising an input device on one surface thereof, the base being slidingly connected to the slider plate and configured to slide the base between a closed position in which the input device is disposed between the front portion and the base and an open position in which the input device is exposed for use.

2. The electronic device according to claim 1, wherein the housing includes housing screw bosses that extend therefrom and into corresponding holes defined in the slider plate.

3. The electronic device according to claim 2, wherein the slider plate is clamped to the housing by housing screws threaded in the housing screw bosses.

4. The electronic device according to claim 3, wherein the slider plate is clamped to the housing by a periphery of a head of the housing screws.

5. The electronic device according to claim 1, wherein the slider plate includes plate screw bosses that extend therefrom and into holes defined in thehousing.

6. The electronic device according to claim 5, wherein the housing is clamped to the slider plate by plate screws threaded in the plate screw bosses.

7. The electronic device according to claim 6, wherein the plate screws are hidden between the display and the slider plate.

8. The electronic device according to claim 6, wherein the housing is clamped by a periphery of a head of the plate screws.

9. The electronic device according to claim 1, wherein the input device comprises a keyboard.

10. The electronic device according to claim 1, further comprising a display disposed within the front housing.

11. The electronic device according to claim 10, wherein the display comprises a touch-sensitive display.

12. The electronic device according to claim 1, wherein the base is in sliding connection with the slider plate by an intermediate plate that slides relative to the slider plate.

13. The electronic device according to claim 1, further comprising functional components provided within one of the front portion and the base, the functional component comprising a memory and a processor.
